# EUROPEAN PATENT SPECIFICATION

(11) **EP 0 875 346 B1**
(45) Date of publication and mention of the grant of the patent: **30.11.2005**
(21) Application number: 98107813.2
(22) Date of filing: 29.04.1998
(51) Int. Cl.: B27C 3/04, B27C 3/06, B23Q 16/00, B27M 1/08, B27F 4/00

(54) **Apparatus for drilling and fitting pins in the head portions of panels**
Gerät zum Bohren und Setzen von Stiften in Stossflächen von Panelen
Appareil de forage et de pose de goujons dans des côtés latéraux de panneaux

(30) Priority: 02.05.1997 IT MI971033
(43) Date of publication of application: 04.11.1998
(73) Proprietor: Alberti Vittorio S.p.A., 20060 Gessate MI (IT)
(72) Inventor: Alberti, Luigi c/o Alberti Vittorio S.P.A., 20063 Cernusco sul Naviglio, Milano (IT)
(74) Representative: Cicogna, Franco

(56) References cited:
- DE-A- 4 311 434
- DE-U- 8 604 495
- DE-U- 8 604 497
- US-A- 4 694 871

## Description

The present invention relates to an apparatus for drilling and fitting pins in the head portions of panels as per the preamble of claim 1.

Such an apparatus is disclosed by DE 8 604 495 U.

As is known, a very important requirement of the wood processing industry is that of properly drilling and fitting or engaging joining pins in the head portions of wood panels in general, such as hardboard or the like wood material panels.

The high yield of this apparatus is frequently offset by the required high flexibility of said apparatus in order to properly drill and fit joining pins in different regions of the panels, i.e. on the head portion of the panel, with a high accuracy.

### SUMMARY OF THE INVENTION

The aim of the present invention is to provide an apparatus for drilling and fitting pins in the head portions of panels, at different regions thereof, while providing a very high working accuracy, depending on different making requirements.

Within the scope of the above mentioned aim, a main object of the present invention is to provide such an apparatus for drilling and fitting pins both in the front head portion, i.e. the so-called head, of panels, and in the rear or tail head portion thereof.

Another object of the present invention is to provide such an apparatus in which the locations of the drilled holes and of the fitted pins can be automatically changed according to a preset making program.

Yet another object of the present invention is to provide such an apparatus which is suitable to provide drilled holes in panels of mutually different size.

According to the present invention, the above mentioned aim and objects, as well as yet other objects, which will become more apparent hereinafter, are achieved by an apparatus according to claim 1.

### BRIEF DESCRIPTION OF THE DRAWINGS

Further characteristics and advantages of the apparatus according to the present invention will become more apparent hereinafter from the following disclosure of a preferred, though not exclusive, embodiment of said apparatus, which is illustrated, by a merely indicative but not limitative example, in the accompanying drawings, where:

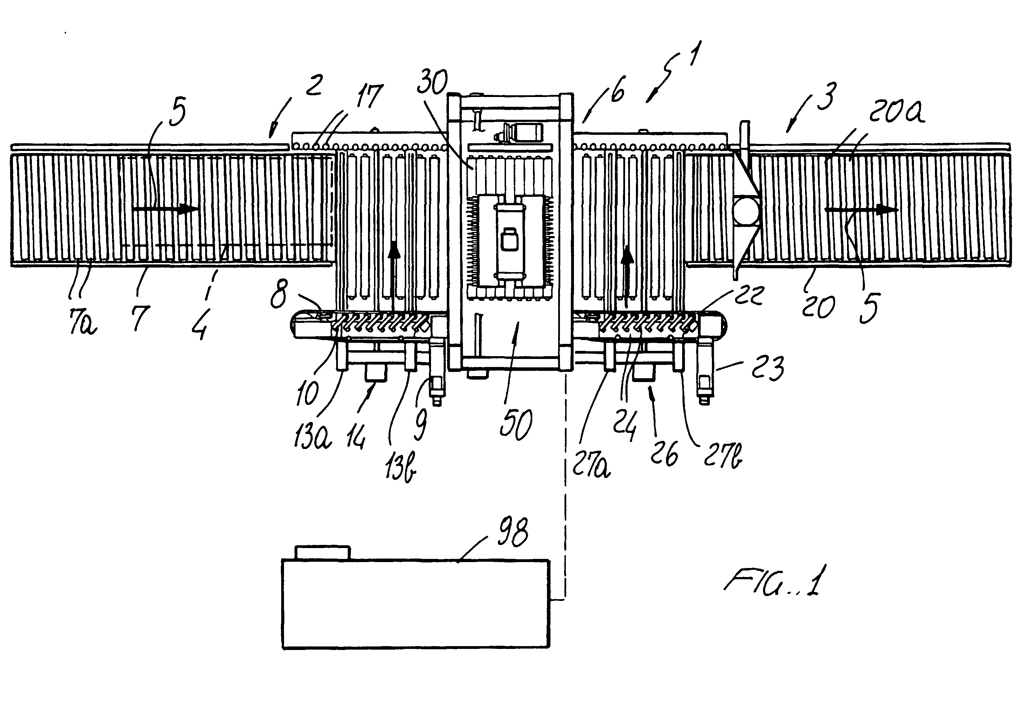

Figure 1 is a schematic top plan view illustrating the apparatus according to the invention;
Figure 2 is a schematic side elevation view illustrating the subject apparatus;

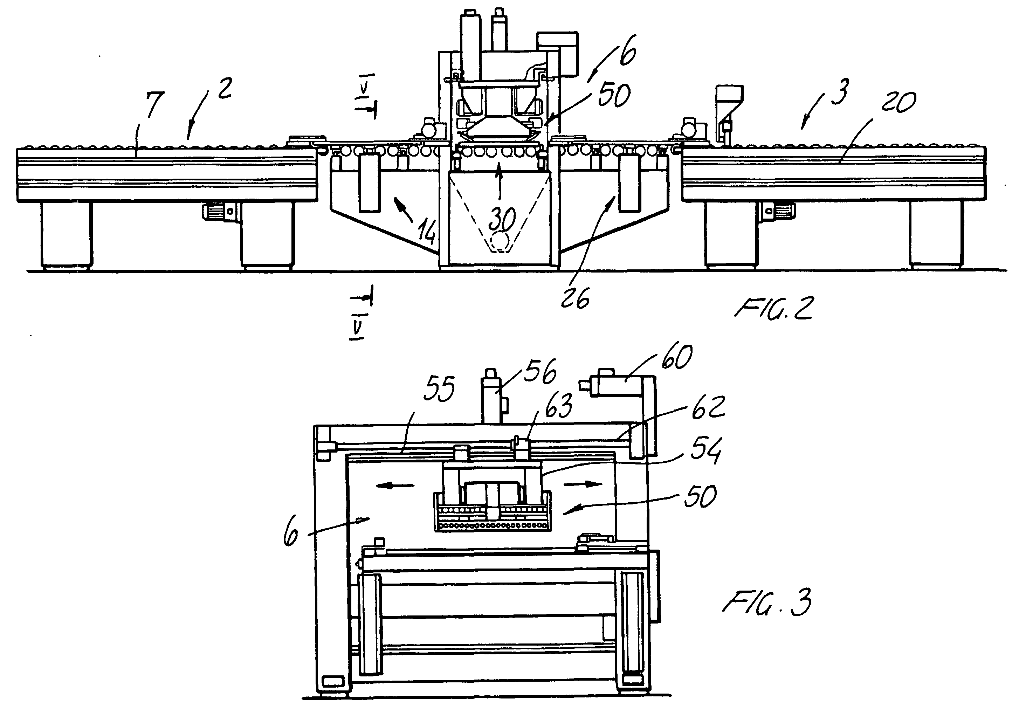

Figure 3 is a schematic front elevation view illustrating the subject apparatus;
Figure 4 illustrates an enlarged detail of Figure 1, related to panel driving means;
Figure 5 is a cross-sectional view substantially taken along the section line V-V of Figure 2;

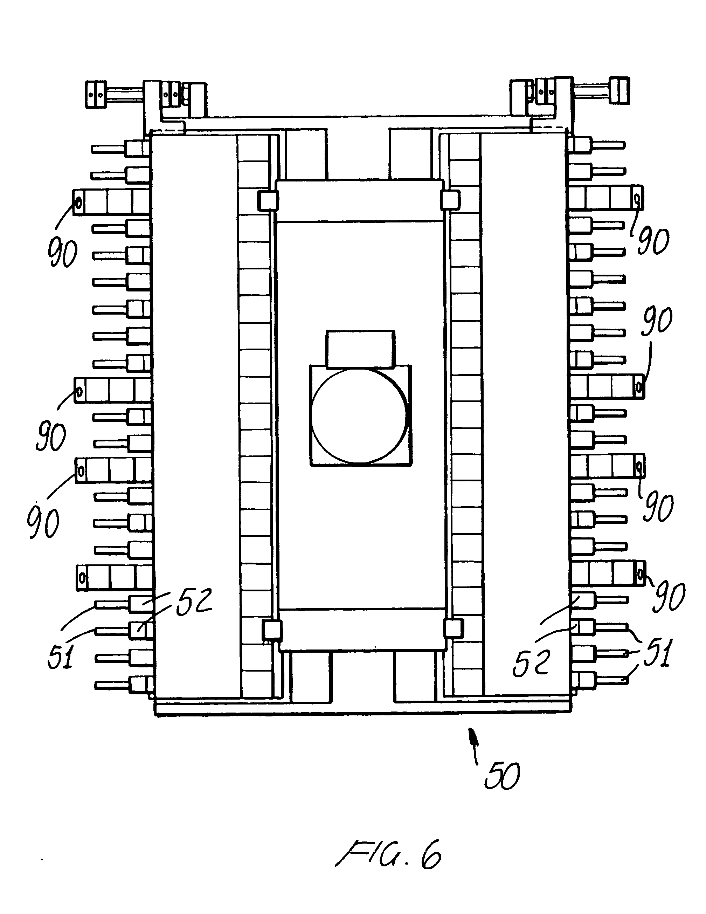

Figure 6 is a top plan view illustrating the operating head;
Figure 7 is a front elevation view, as partially cross-sectioned, illustrating the operating head;
Figure 8 is a cross-sectional view substantially taken along the section line IX-IX of Figure 8;
Figure 10 illustrates a detail related to the operating head, as seen in side elevation and partially cross-sectioned;
Figure 11 schematically illustrates the glueing and fitting means for glueing and fitting pins, assembled on said operating head;
Figure 12 illustrates an enlarged detail of Figure 11;

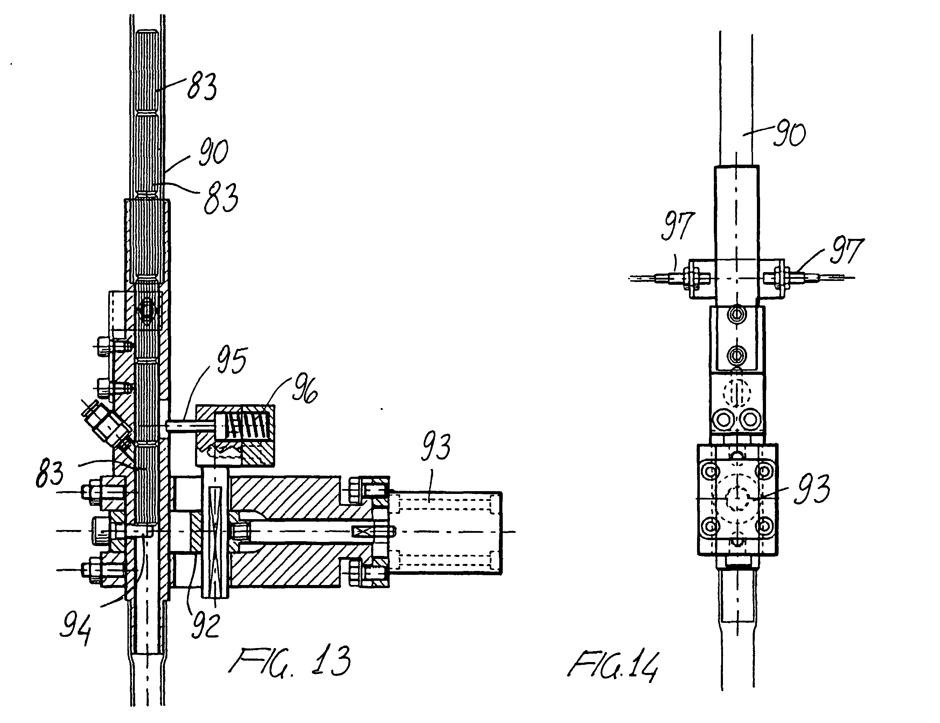

Figure 13 illustrates a further enlarged detail of Figure 11;

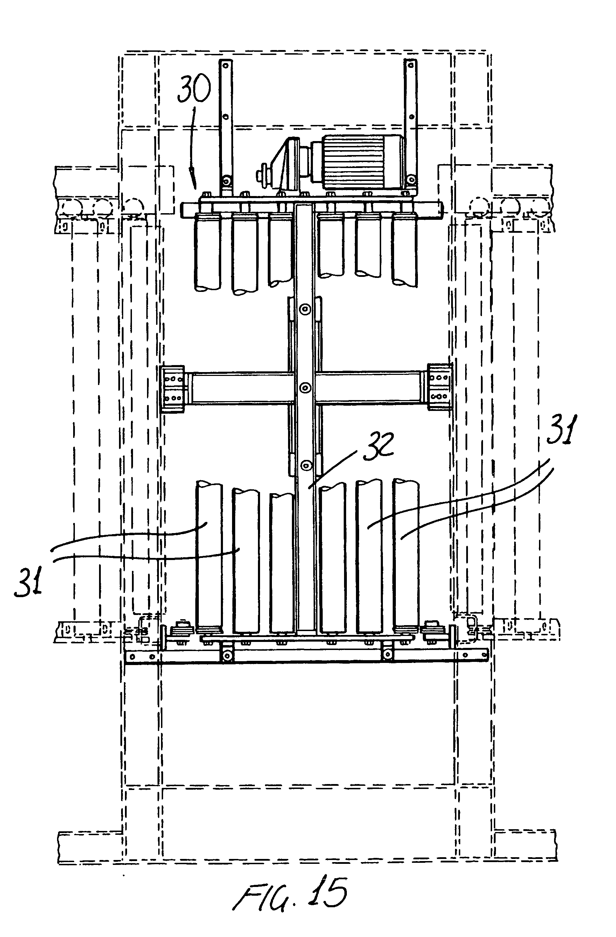

Figure 14 is a front elevation view illustrating the same detail of Figure 13;

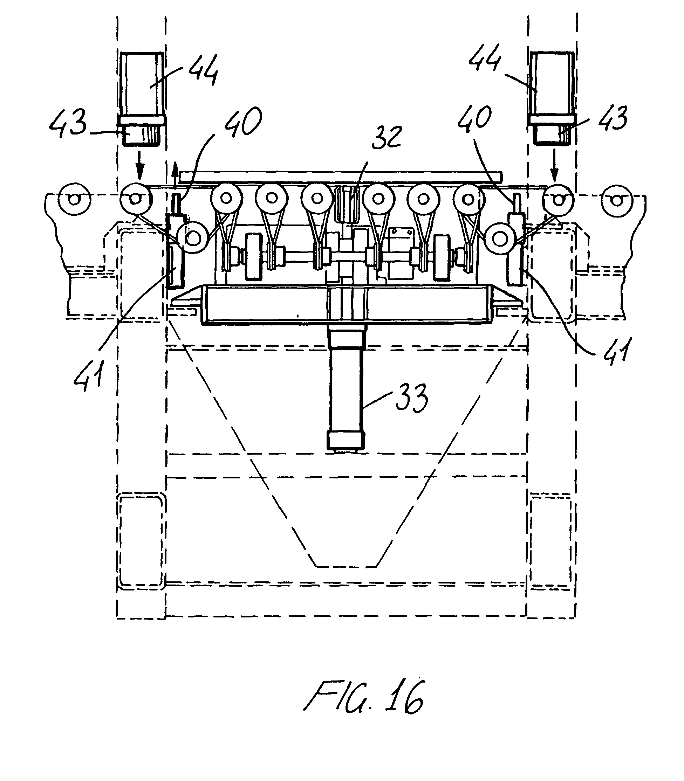

Figure 15 is a top plan view illustrating the working station, the operating head being omitted therefrom; and
Figure 16 is a schematic side elevation view, as partially cross-sectioned, illustrating the working station.

### DESCRIPTION OF THE PREFERRED EMBODIMENTS

With reference to the number references of the accompanying figures, the apparatus according to the present invention, which has been generally indicated by the reference number 1, comprises panel driving means 2 and 3 for driving panels 4 along a panel feeding direction, shown in the figures by the arrow 5.

More specifically, the panel 4 driving means comprise first panel feeding means 2, arranged upstream of a working station 6 and second panel feeding means 3, arranged downstream of said working station 6, according to the feeding direction 5.

The first panel driving means 2 comprise a roller assembly 7, including a plurality of driven rollers 7a which have their axes horizontally arranged and defining a substantially horizontal supporting surface for the panels 4.

Adjoining the end portion of the roller assembly 7, at the top thereof, is provided a belt 8 having a leg thereof extending substantially parallel to the panel feeding direction 5.

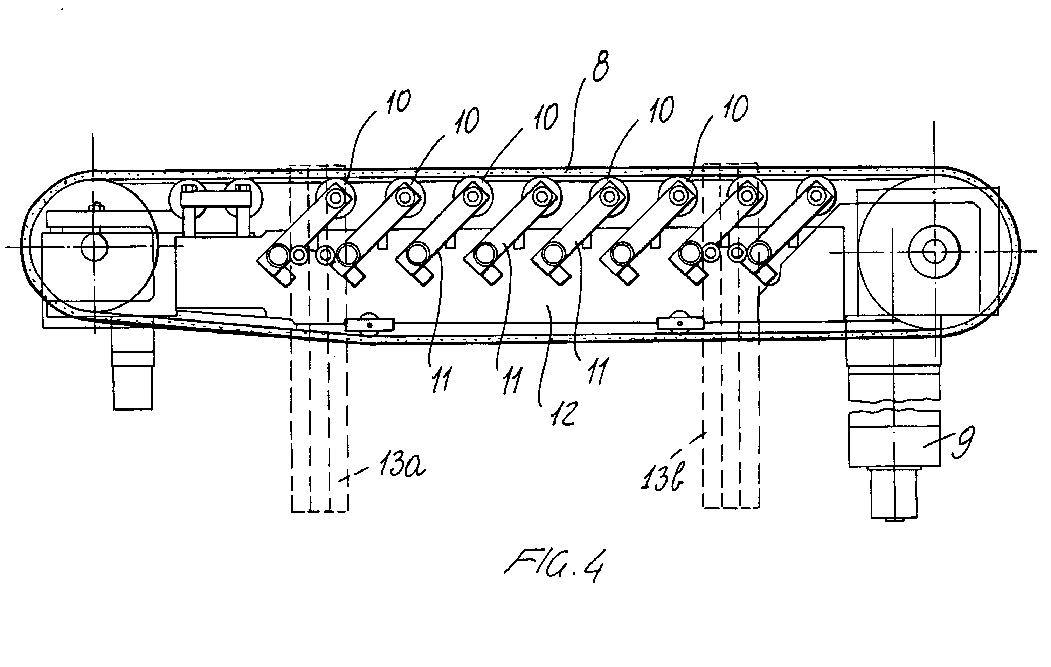

The belt 8, as is clearly shown in Figure 4, is driven by a driving motor 9 causing the leg of said belt facing the end portion of said roller assembly 7 to be driven with the same feeding direction as the panel feeding direction 5.

On the mentioned leg of the belt 8 vertical axis pressing rollers 10 operate, said pressing rollers being supported by respective supporting arms 11 operating to increase the adhesion of said belt leg with one of the two sides of the panel 4, parallel to the panel feeding direction 5, the belt 8 faces to.

The belt 8, moreover, is supported on a framework 12 which is in turn slidably supported on sliding guides 13a and 13b which are horizontally arranged perpendicular to the panel feeding direction 5.

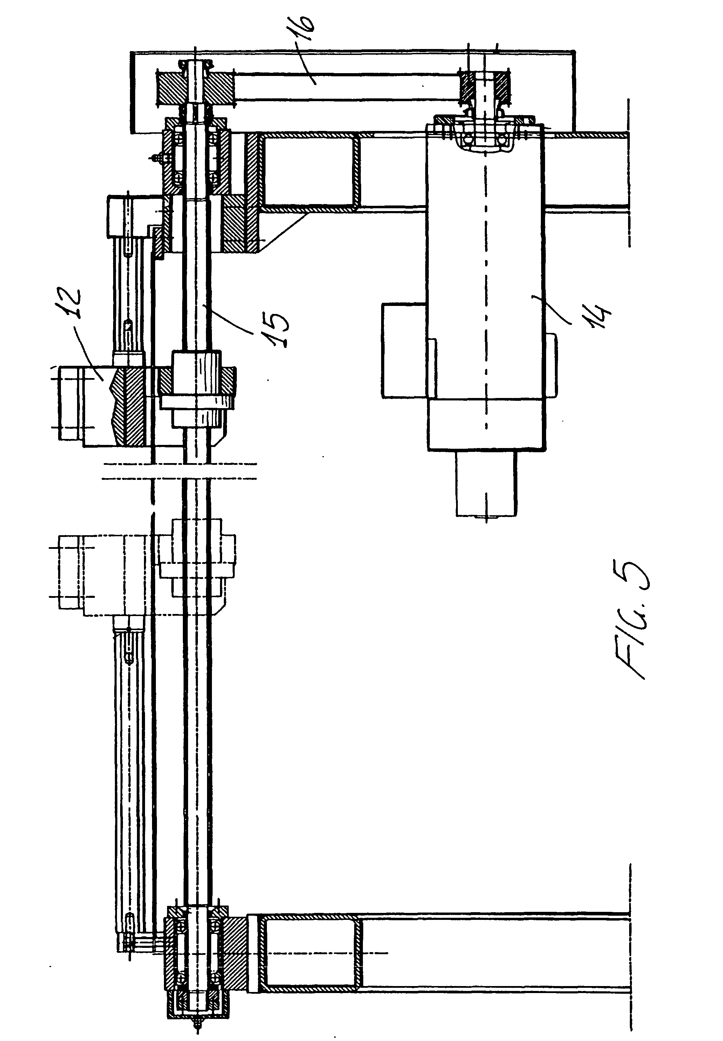

The framework 12, as shown in Figure 5, can be controllably driven along the sliding guides 13a and 13b as controlled or driven by a driving motor 14, the output shaft thereof is coupled, through a coupling belt 16, to a threaded shaft 15, engaging with a nut screw rigid with the framework 12. Thus, by operating the driving motor 14, it is possible to change the location of the framework 12, and accordingly of the belt 8, in a direction transversal of the panel feeding direction 5, to allow the belt 8 to engage with one of the two sides of the panel 4 parallel to the panel feeding direction 5, independently from the width of the panel.

Laterally of the end portion of the roller assembly 7, on the side thereof opposite to the belt 8, urging rollers 17 are provided, said urging roller being adapted to idly turn about respective vertical axes, so as to define a bearing surface for the other side of the panel 4, parallel to the panel feeding direction 5. In operation, the rollers 17 will abut against the other side of the panel 4, urged against said rollers by said belt 8, thereby allowing the panel 4 to be fed along the panel feeding direction 5.

Likewise, the second feeding means 3 comprise a roller assembly 20, including a plurality of driven rollers 20a, also having their axes horizontally arranged and defining a substantially horizontal bearing or supporting surface for the panels 4.

On the top of the starting portion of the roller assembly 20, is provided a belt 22, substantially like to said belt 8, and likewise driven by a driving motor 23. On the leg of the belt 22 parallel to the panel feeding direction 5 is also arranged, at the top of the starting portion of the roller assembly 20, a plurality of pressing rollers 24, designed for enhancing the adhesion of the belt 22 with one of the two sides of the panel 4, parallel to the panel feeding direction 5.

The belt 22 is also supported on a supporting frame 25 which can be driven by a driving motor 26 along sliding guides 27a and 27b perpendicular to the panel feeding direction 5. In this case too, the driving of the framework 25, and accordingly of the belt 22, transversely of the panel feeding direction 5, along the sliding guides 27a and 27b, is achieved by a coupling between a threaded shaft coupled to the output shaft of the driving motor 26 and a ring nut rigid with the framework 25 supporting said belt 22.

Differently from the first feeding means 2, at least the start portion of the roller assembly 20 and the belt 22 can reverse their feeding direction, to cause, for a short length, the panel 4 to be withdrawn, or for driving said panel in a direction opposite to the panel feeding direction 5, in order to properly arrange the rear head portion of the panel, or tail portion, at the working station 6.

Between the first panel feeding means 23 and second panel feeding means 3 a middle roller assembly 30 is arranged, said middle roller assembly comprising a plurality of rollers 31 having horizontal parallel axes, defining a substantially horizontal supporting or bearing surface for said panel 4 and operating for conveying said panel 4 from the first feeding means 2 to the second feeding means 3.

The rollers 31 of the roller assembly 30 are supported on a framework 32, which can slide, as driven by a fluid operated cylinder 33, or any other driving means, along vertical sliding guides.

Near the working station 6, are arranged locating and locking means for locating and locking the panels 4.

More specifically, the panel locating means comprise, immediately upstream and immediately downstream of the working station 6, abutment elements, such as pegs 40, which can be withdrawn, for example by corresponding pneumatic cylinders 41, on the top of the panel 4 supporting surface, defined by the first feeding means 2 and second feeding means 3, so as to engage with the front head portion or rear head portion, or tail, of the panel 4, to stop the panel feeding in the panel feeding direction 5 or in the opposite direction, as is shown in particular in Figure 16.

The locking means for locking the panel 4 comprise pressing elements 43, which can also be driven, along a vertical direction, by related fluid cylinders 44, for engaging with the top face of the panel 4, to hold the panel locked during the processing thereof performed in the station 6.

In said station an operating head generally indicated by the reference number 50 is provided, said head being provided, on the two sides thereof perpendicular to the panel feeding direction 5, with a plurality of drilling tools 51, mounted on respective mandrels 52.

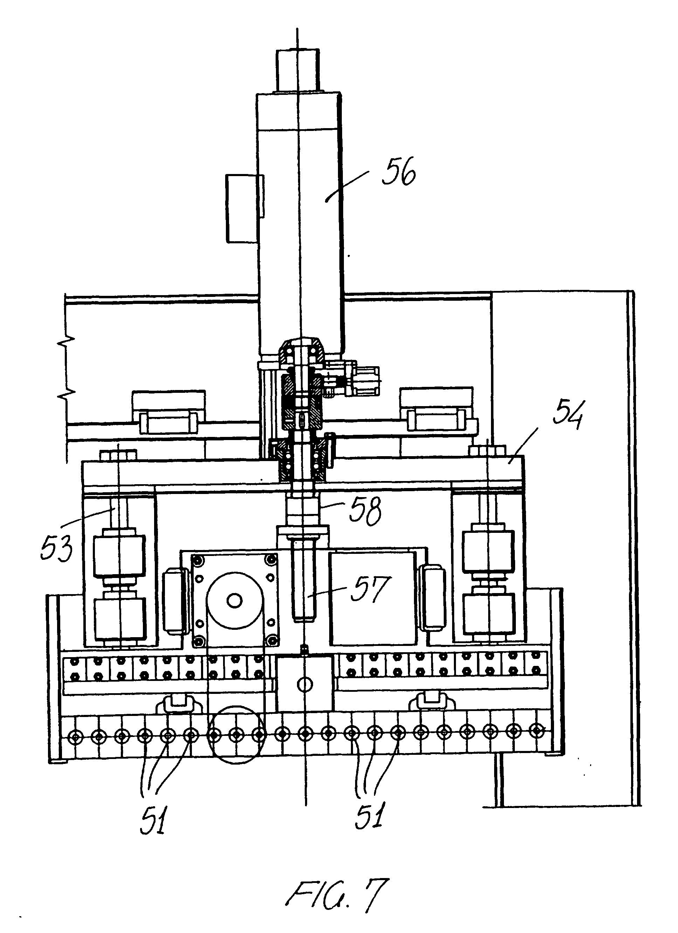

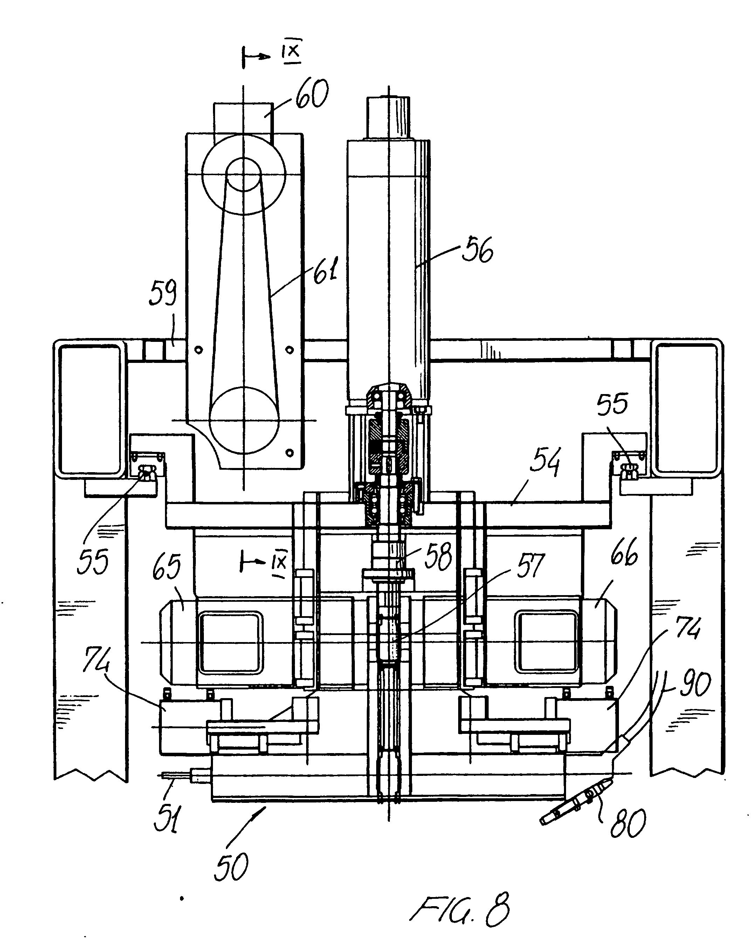

The operating head 50, as clearly shown in Figures 7 and 8, is slidably mounted on two sliding vertical guides 53, which are in turn supported on a movable truck 54, which can be driven along horizontal guides 55 perpendicular to the panel feeding direction 5.

On the truck 54 is supported a motor 56 having its output shaft coupled to a threaded shaft 57 engaging with a ring nut defined inside a bushing 58, rigid with the operating head 50, to cause the operating head 50, as said motor 56 is operated, to be vertically driven along the sliding guides 53.

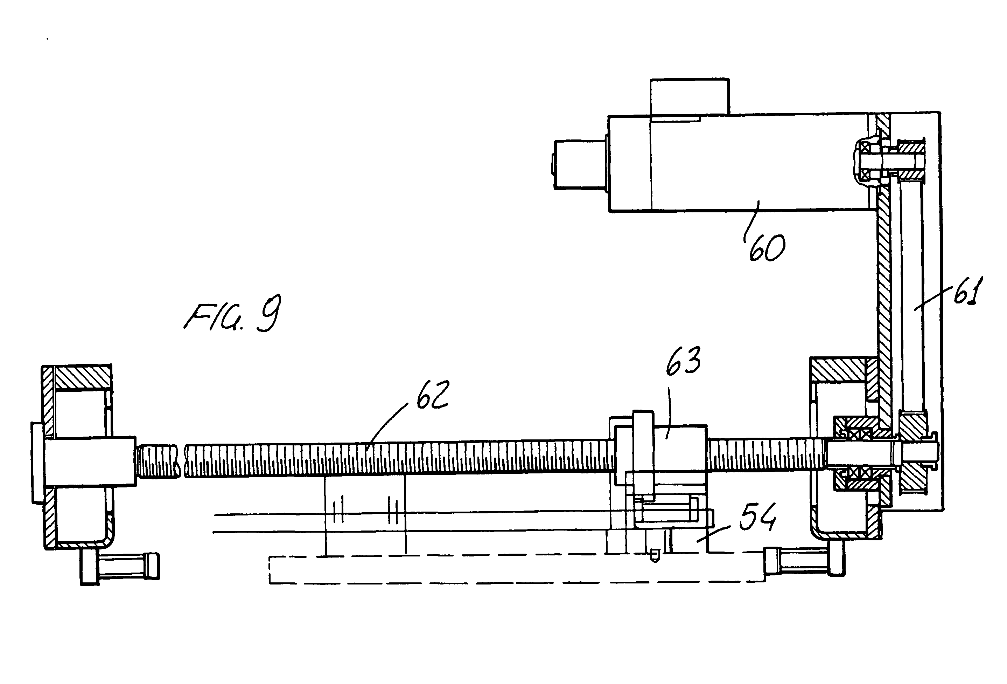

On the bearing framework 59 of the apparatus is moreover supported a motor 60 which, through a belt 61, is coupled to a threaded shaft 62 horizontally arranged perpendicular to the panel feeding direction 5, as is clearly shown in Figure 9.

The threaded shaft 62 is rotatably supported about its rotary axis from the same bearing framework 59 and engages with a ring nut defined inside a bushing 63, which is rigid with the truck 54, so that, as the motor 60 is operated, the truck 54 is driven either in a direction or in the other direction, thereby driving the operating head 50 in a horizontal direction, transversally of the panel feeding direction 5.

In operation, by actuating the motor 56, the vertical location of the drilling tools 51 can be changed, whereas, by actuating the motor 60, the horizontal location of said drilling tools 51 will be changed.

Thus, two drilling tool assembly are available, which are respectively arranged on the two sides of the operating head 50, and which are arranged perpendicular to the panel feeding direction 5.

The mandrels 52 of the drilling tools, arranged on one of said two sides, are rotatively driven about their respective rotary axes which are parallel to the panel feeding direction 5, by a same motor 65, 66 supported on the operating head 50.

The motors 65 and 66 are coupled, through a belt 67, to a hollow shaft 68, rotatably supported about its rotary axis, extending parallel to the panel feeding direction 5, inside the operating head 50.

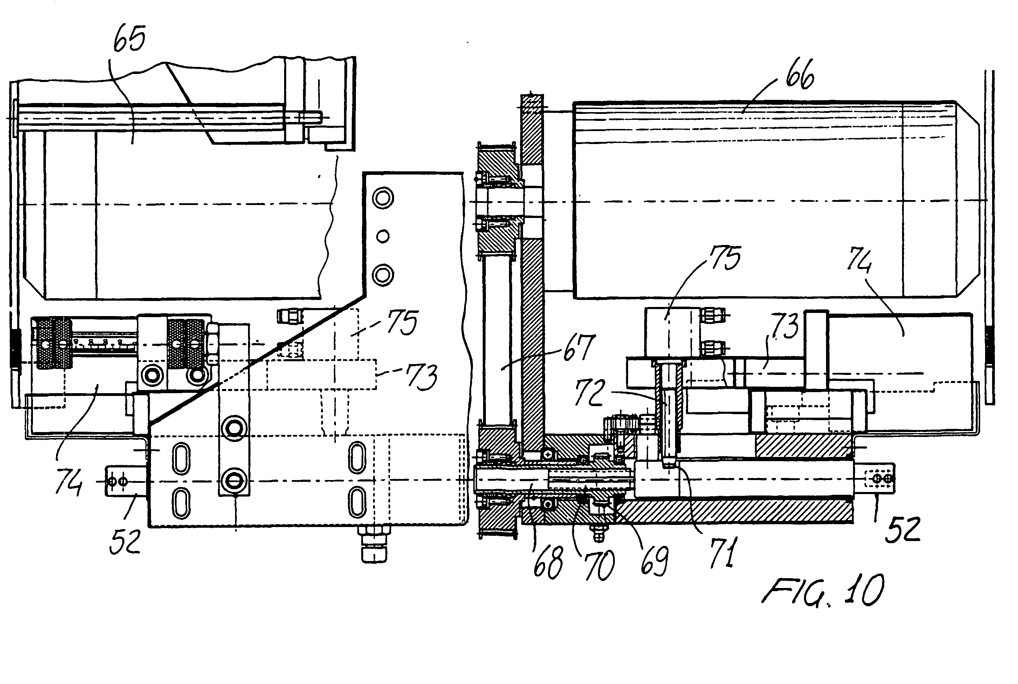

Thus, a shaft 68 for each mandrel will be available, the shafts 68 of the several mandrels 52 being coupled to one another by a gear or belt coupling. Figure 10 shows a gear wheel 69, or toothed pulley, of one of the shaft 68 which can be used for coupling to one another the several shafts 68.

Each mandrel 52 is coupled to its related shaft 68 by a fluted shaft 70, which can slide inside the shaft 68, while preserving the rotary coupling between the mandrel 52 and its shaft 68.

The shaft of each mandrel is moreover provided with a recess 71 in which a clutching pin 72 mounted on a truck 73 can be engaged, said truck 73 being caused to slide, by a fluid operated cylinder 74 or any other driving means supported on the operating head 50. The engagement or disengagement of the pin 72 with/from the recess 71 is achieved by a fluid operated cylinder 75 supported on the truck 73.

More specifically, for each side of the operating head 50 supporting the drilling tools 52, a truck 73 movable in a direction parallel to the panel feeding direction 5 under the control of a fluid operated cylinder 74, is provided.

Moreover, on the truck 73 is provided, for each mandrel, a fluid operated cylinder 75, adapted to operate a clutching pin or peg 72. Depending on whether the clutching pins or pegs 72 are engaged with or disengaged from the recess 71 of the related mandrel 52, the subsequent actuating of the fluid operated cylinder 74 will cause the mandrel 52 to be either driven or not along the panel feeding direction 5. Thus, it will be possible to individually drive the preset drilling tools 51 to drill through the panel.

On the two sides of the operating head 50 supporting the drilling tools 51, spraying nozzle 80 for spraying a glue for glueing the pins 83 are moreover provided.

On those same sides of the operating head are moreover arranged means for fitting the pins 83 inside the holes drilled in the head portion of the panel 4.

Said fitting means comprise a plurality of pushing elements 81, which can be controllably driven along directions parallel to the panel feeding direction 5, inside chambers 82 in turn supplied with a pin 83 to be fitted.

The actuation of the pushing elements 81 is achieved by a truck 73, individually provided for all of the pushing elements arranged on a same side of the operating head 50, in accordance to the above disclosure related to the operation of the several drilling tools.

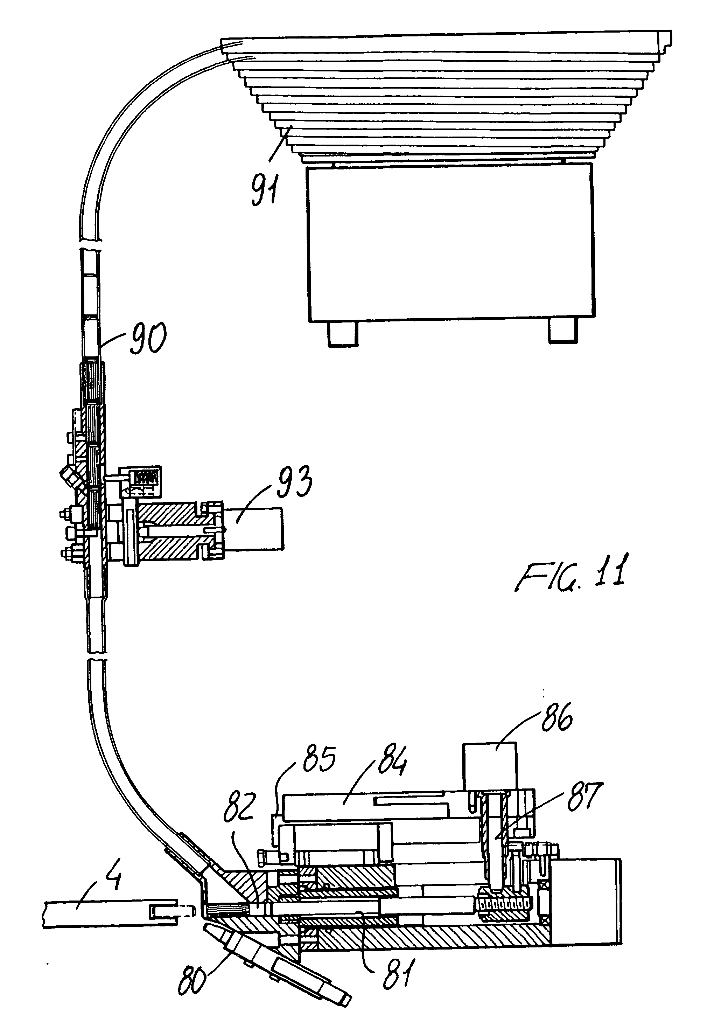

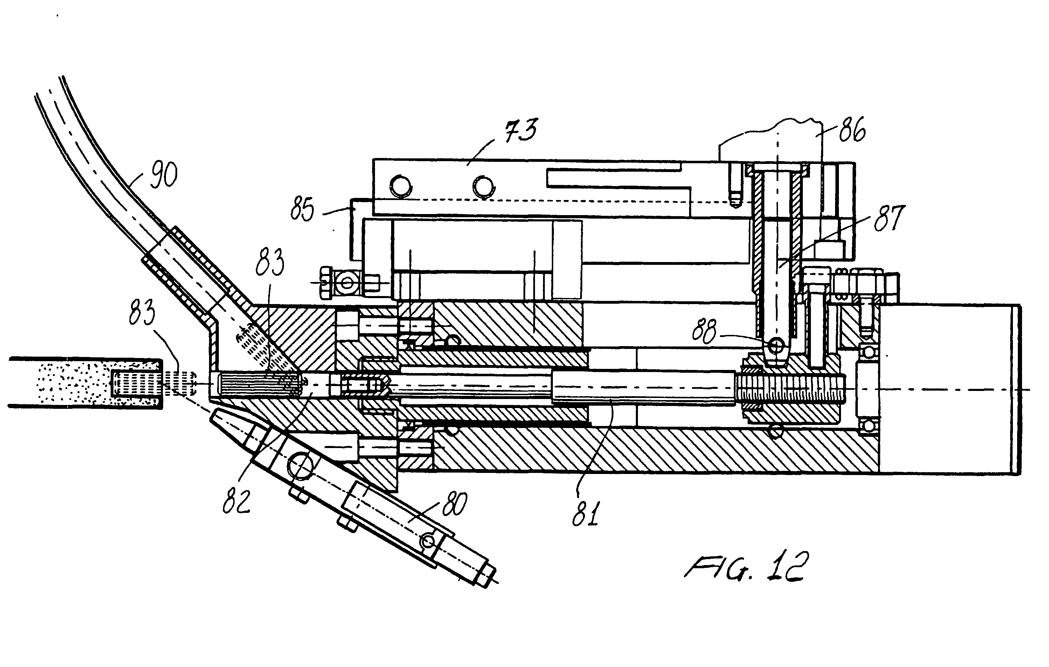

More specifically, as clearly shown in Figures 11 and 12, the truck 73 is slidably supported on guides 85, parallel to the panel feeding direction 5.

For each pushing element 81, the truck 73 comprises thereon a fluid operated cylinder 86 in turn actuating a clutching peg 87, to engage or disengage said peg with/from a recess 88 formed on the related pushing element 81. Thus, as the trucks 73 is driven to cause the peg or pin 83 to be ejected from the chamber 82, together with the truck 84 will be driven only those pushing elements 81 associated with the truck 73, by engaging the clutching peg 87 in the recess 88, whereas the other pushing elements are held in a rest condition.

Thus, it will be possible to preset and operate exclusively a set number of the pushing elements 81 or all said pushing elements, depending on requirements.

Each chamber 82 is supplied with a pin 83 coming, through a conveying duct 90, from a storing hopper 91 in which a plurality of said pins are stored.

Along the conveying duct 90 are arranged supplying means for supplying to the chamber 82 only a pin 83 at a time.

These supplying means, as clearly shown in Figures 11 and 12, comprise a movable element 92 which is driven in a direction transversal of the conveying duct 90, by a fluid operated cylinder 93.

The movable element 92 is provided with a first abutment 94 operating for shutting off the conveying duct 90, so as to cause the pin 83 conveyed along the conveying duct 90 to be stopped.

Said movable element 92 is provided with a second abutment 95, designed for engaging with the second pin 83 conveyed along the conveying duct 90.

The two abutments 94 and 95 are so arranged that, as the first abutment 94 closes the conveying duct 90, the second abutment 95 will be disengaged from the second pin 83 whereas, as the first abutment 94 disengages the conveying duct 90, the second abutment 95 will engage with the second pin to restrain it from moving. The abutment 95 is moreover urged by a urging spring 96, in order to prevent the pin engaged therewith from being damaged.

The conveying of the pins 93 along the conveying duct 90 is controlled by photocells 97 or any other suitable detecting means.

The apparatus according to the present invention is controlled by a programmable microprocessor 98, in which can be input all of the data related to the size of the panels, as well as to the drilling operations and to the pins to be fitted, thereby the microprocessor will operate the apparatus depending on the set making requirements.

The apparatus according to the present invention operates as follows.

The panels 4 to be drilled at the head and/or tail portions thereof are arranged on the roller assembly 7 of the first panel feeding means 2. Depending on the transversal size of the panel 4, the apparatus controlling microprocessor 98 will actuate the motor 14 to bring the belt 8 to a position suitable for engagement with one of the two sides of the panel 4 parallel to the panel feeding direction 5, whereas the other side bears against the rollers 7.

Then, the panel is driven along the panel driving direction 5 by the roller assembly 7 and belt 8.

Immediately upstream of the working station 6, the abutments 40 are raised for engaging with the panel 4 head portion thereby causing the panel to stop, while the pressing elements 43 for locking the panel 4 with its head portion at a set position, in order to be processed by the operating head 50, are actuated.

With the panel 4 in a locked condition, the middle roller assembly 30 is lowered to allow the operating head 50 to be also lowered to arrange its drilling tools 51 at a set level with respect to the panel 4 head portion.

The operating head 50, as the motor 56 is operated, is brought to the desired or set height level and, by actuating the motor 60, it will be arranged in a direction transversal of the panel feeding direction 5, thereby properly arranging the drilling tools 51 with respect to the head portion of the panel 4.

The drilling tools 51 are rotatively driven about their respective rotary axes by the motor 65 and the stop pegs 72 of the mandrel 52 bearing said drilling tools 51 provided for drilling the holes, are engaged, by operating the corresponding fluid operated cylinder 75, with the recess 71 of said mandrels.

Then, the fluid operated cylinder 74 is operated to drive the truck 73 for feeding the drilling tools the mandrel of which are engaged with the clutching peg 72, toward the panel 4, thereby drilling in said panel.

Then, the drilling tools 51, by reversely operating the fluid operated cylinder 74, are withdrawn from the holes and arranged, by driving the operating head 50 in a direction transversal of the panel feeding direction 5, the spraying nozzles 80 for spraying the glue at the formed holes.

Then, by operating the truck 84, the pin 83 fitting means are driven. Thus the pressing elements 81, engaged by the clutching peg 87 will engage their related pin 83 inside the drilled holes. At this time, the operating head 50 is raised, and is also raised the middle roller assembly 30, which is brought to the level of the bottom side of the panel 4, which is accordingly disengaged from the pressing elements 43.

The driving of the rollers 31 of the roller assembly 30, together with the driving of the roller assembly 7 and of the belt 8, will cause the panel 4 to be further displaced to bring it to the starting portion of the roller assembly 20.

The belt 22, by operating the motor 26 has been preset at a position suitable for engaging the panel 4 and, as the rear head or tail portion of the panel 4 has left the abutments 40, arranged immediately downstream of the working station 6, then the driving of the roller assembly and belt 22 will be reversed to cause the panel 4 to be withdrawn, and the abutments 40 arranged immediately downstream of the working station 6 to be also removed from the panel, thereby the rear or tail head portion of the panel 4 will stop against said abutments.

Then, the pressing elements 43 arranged immediately downstream of the working station 6 are actuated to lock the panel 4.

Then, the working steps disclosed with reference to the drilling and fitting of the pins 83 in the front head portion of the panel are repeated, with the sole difference that will operate the tools 51 and the fitting means for fitting the pins arranged on the side of the operating head 50 facing the side opposite to the side with respect to which the operation has been hereinabove disclosed.

At the end of the drilling and pin 83 fitting operations, in which the pins 83 are fitted in the rear head or tail portion of the panel, said panel is disengaged from the pressing elements 43 and is removed from the apparatus by the roller assembly 20.

From the above disclosure and from the observation of the figures of the accompanying drawings, it should be apparent that the invention fully achieves the intended aim and objects.

In particular, the fact is to be pointed out that an apparatus has been provided which is specifically designed for drilling the head and tail portions of panels, as well as for fitting in the drilled holes the mentioned pins, in a very accurate manner and at positions which can be preset depending on the panel making requirements, said apparatus being very flexible with respect to the mentioned locating, as well as to the number of the holes to be drilled, as well as the pins to be fitted therein.

While the inventive apparatus has been disclosed with reference to preferred embodiments thereof, it should be apparent that the disclosed embodiments are susceptible to several modifications and variations which come within the scope of the appended claims.

In practicing the invention, the used materials, as well as the contingent size and shapes can be any, depending on requirements.

## Claims

1. An apparatus (1) for drilling and fitting pins in the head portions of panels (4), said apparatus comprising panel driving means (2, 3) for driving said panels (4) along a panel feeding direction, panel locating and locking means (40, 41; 43, 44) for respectively locating (40, 41) and locking (43, 44) a panel (4) at a working station (6), with the head portion of said panel (4) being arranged in a plane substantially perpendicular to said panel feeding direction, an operating head (50) arranged in said working station (6) and provided with drilling tools (51) for drilling the head portion of said panel (4) and pin glueing and filling means for glueing and fitting pins (83) inside the holes drilled in said head portion of said panel (4), **characterized in that** said driving means (2, 3) comprise first panel feeding means (2) arranged upstream of said working station (6) and second panel feeding means (3) arranged downstream of said working station (6), said second feeding means (3) having a reversible driving direction in order to arrange the rear head portion of said panel (4) at said working station (6).

2. An apparatus according to claim 1, **characterized in that** said operating head (50) supports a plurality of said drilling tools (51) on the two sides thereof facing said panel feeding direction (5) and in a reverse direction, for drilling the front head portion and the rear head portion of said panel (4).

3. An apparatus according to one or more of the preceding claims, **characterized in that** said drilling tools (51) can be controllably individually driven in parallel to said panel feeding direction (5).

4. An apparatus according to one or more of the preceding claims, **characterized in that** said pin (83) fitting means (81) are supported on the sides of said operating head (50) bearing said drilling tools (51).

5. An apparatus according to one or more of the preceding claims, **characterized in that** on the sides of said operating head (50) supporting said drilling tools (51) and said pin fitting means (81), glue spraying nozzles (80) are arranged.

6. An apparatus according to one or more of the preceding claims, **characterized in that** said first feeding means (2) comprise a roller assembly (7) defining a substantially horizontal supporting surface for said panels (4) and a belt (8) arranged on the top of said roller assembly (7) and having a leg thereof contacting that side of the panels (4) parallel to said panel feeding direction (5), said belt (8) facing vertical axis abutment rollers (10) in turn contacting the opposite side of said panels (4) parallel to said panel feeding direction (5).

7. An apparatus according to one or more of the preceding claims, **characterized in that** said second feeding means (3) comprise a roller assembly (20) defining a substantially horizontal supporting surface for said panels (4) and a belt (22) arranged on the top of said roller assembly (20) and having a leg thereof contacting that side of said panel (4) parallel to said panel feeding direction (5), said belt (22) facing vertical axis abutment rollers (24) contacting the opposite side of said panels (4) parallel to the panel feeding direction (5).

8. An apparatus according to claims 6 or 7, **characterized in that** the legs of said belts (8, 22) contacting said panel (4) are affected by pressing rollers to increase the binding of said belts on the side of the panel.

9. An apparatus according to one or more of the claims 6 to 8, **characterized in that** said belts (8, 22) are supported on a framework (12, 25) which can be controllably driven along a horizontal direction perpendicular to the panel feeding direction (5) in order to adjust the positions of said belts (8, 20) to the width of said panel (4).

10. An apparatus according to one or more of the preceding claims, **characterized in that** said operating head (50) can be controllably driven along a horizontal direction perpendicular to the panel feeding direction (5).

11. An apparatus according to one or more of the preceding claims, **characterized in that** said operating head (50) can be controllably driven along a vertical direction.

12. An apparatus according to one or more of the preceding claims, **characterized in that**, at said working station (6), between said first and second feeding means (2, 3), is arranged a middle roller assembly (30) supported on a framework (32) which can be controllably driven along a vertical direction.

13. An apparatus according to one or more of the preceding claims, **characterized in that** said panel locating and locking means (40, 41; 43, 44) comprise, near said working station (6), abutments (40) which can be withdrawn at the top from the laying plane of said panel (4) in order to engage with the front or rear head portion of said panel (4) to stop the feeding or withdrawing movement of said panel, as well as vertical pressing means (43) engageable with the top face of said panel (4) for locking said panel (4).

14. An apparatus according to one or more of the preceding claims, **characterized in that** said pin fitting means (8) are pin (83) supplied, through a pin conveying duct (90), from a pin storing hopper (91), said pin conveying duct (90) including along its length supplying means for supplying, to said pin fitting means (81), a pin (83) at a time.

15. An apparatus according to one or more of the preceding claims, **characterized in that** said drilling tools (51) are supported by a plurality of mandrels (52) simultaneously rotatively driven by a motor (65, 66), driving means being moreover provided for driving said mandrel parallel to said panel feeding direction (5), said driving means being adapted to be individually coupled to said mandrels (52).

16. An apparatus according to one or more of the preceding claims, **characterized in that** said pin fitting means (81) comprise a plurality of movable pushing elements (81), along directions parallel to the panel feeding direction (5), inside a plurality of chambers (82) supplied with a pin (83) at a time, further driving means being moreover provided for driving said pushing elements (81), inside said chambers (82) which can be individually engaged with said pushing elements (81).

17. An apparatus according to one or more of the preceding claims, **characterized in that** said pin supplying means adapted to supply a pin (83) at a time to said pin fitting means (81) comprise a movable element (92) which can be driven transversely of said pin conveying duct (90), said movable element (92) including a first abutment (94) for stopping thereagainst the first pin (83) conveyed along said pin conveying duct (90) and a second abutment (95) which can be engaged by a second conveyed pin (83), said first abutment (94) engaging with said first pin (83), whereas said second abutment (95) disengages from said second pin (83) and vice versa by causing said movable element (92) to be driven either in a direction or in the opposite direction.

## Patentansprüche

1. Vorrichtung (1) zum Bohren und Setzen von Stiften in die Stoßflächen von Paneelen (4), wobei die Vorrichtung Folgendes umfasst: Paneelantriebsmittel (2, 3) zum Antreiben der Paneele (4) entlang einer Paneelvorschubrichtung; Paneelpositionierungs- und - arretierungsmittel (40, 41; 43, 44), um ein Paneel (4) an einer Arbeitsstation (6) zu positionieren (40, 41) bzw. zu arretieren (43, 44), wobei die Stoßfläche des Paneels (4) in einer Ebene angeordnet ist, die im Wesentlichen im rechten Winkel zu der Paneelvorschubrichtung verläuft; einen Arbeitskopf (50), der in der Arbeitsstation (6) angeordnet ist und mit Bohrwerkzeugen (51) zum Bohren der Stoßfläche des Paneels (4) und mit Stiftleimungs- und -einsetzmitteln zum Leimen und Einsetzen von Stiften (83) in die Löcher, die in die Stoßfläche des Paneels (4) hineingebohrt wurden, versehen ist, **dadurch gekennzeichnet, dass** die Antriebsmittel (2, 3) erste Paneelvorschubmittel (2), die stromaufwärts von der Arbeitsstation (6) angeordnet sind, und zweite Paneelvorschubmittel (3), die stromabwärts von der Arbeitsstation (6) angeordnet sind, umfassen, wobei die zweiten Vorschubmittel (3) eine umkehrbare Antriebsrichtung aufweisen, um die hintere Stoßfläche des Paneels (4) in der Arbeitsstation (6) anordnen zu können.

2. Vorrichtung nach Anspruch 1, **dadurch gekennzeichnet, dass** der Arbeitskopf (50) mehrere der Bohrwerkzeuge (51) auf seinen beiden Seiten trägt, die in Paneelvorschubrichtung (5) und in eine Umkehrrichtung weisen, zum Bohren der vorderen Stoßfläche und der hinteren Stoßfläche des Paneels (4).

3. Vorrichtung nach einem oder mehreren der vorangehenden Ansprüche, **dadurch gekennzeichnet, dass** die Bohrwerkzeuge (51) steuerbar einzeln parallel zu der Paneelvorschubrichtung (5) angetrieben werden können.

4. Vorrichtung nach einem oder mehreren der vorangehenden Ansprüche, **dadurch gekennzeichnet, dass** die Einsetzmittel (81) für die Stifte (83) auf den Seiten des Arbeitskopfes (50) gehaltert sind, der die Bohrwerkzeuge (51) trägt.

5. Vorrichtung nach einem oder mehreren der vorangehenden Ansprüche, **dadurch gekennzeichnet, dass** an den Seiten des Arbeitskopfes (50), der die Bohrwerkzeuge (51) und die Stifteinsetzmittel (81) trägt, Leimsprühdüsen (80) angeordnet sind.

6. Vorrichtung nach einem oder mehreren der vorangehenden Ansprüche, **dadurch gekennzeichnet, dass** die ersten Vorschubmittel (2) eine Rollenbaugruppe (7), die eine im Wesentlichen horizontale Stützfläche für die Paneele (4) bilden, und ein Band (8) umfassen, das auf der Rollenbaugruppe (7) angeordnet ist und das einen Abschnitt aufweist, der diejenige Seite der Paneele (4) berührt, die parallel zu der Paneelvorschubrichtung (5) verläuft, wobei das Band (8) Anschlagrollen (10), die eine vertikale Achse aufweisen, zugewandt ist, die ihrerseits die gegenüberliegende Seite der Paneele (4) berühren, die parallel zu der Paneelvorschubrichtung (5) verläuft.

7. Vorrichtung nach einem oder mehreren der vorangehenden Ansprüche, **dadurch gekennzeichnet, dass** die zweiten Vorschubmittel (3) eine Rollenbaugruppe (20), die eine im Wesentlichen horizontale Stützfläche für die Paneele (4) bilden, und ein Band (22) umfassen, das auf der Rollenbaugruppe (20) angeordnet ist und das einen Abschnitt aufweist, der diejenige Seite der Paneele (4) berührt, die parallel zu der Paneelvorschubrichtung (5) verläuft, wobei das Band (22) Anschlagrollen (24), die eine vertikale Achse aufweisen, zugewandt ist, die die gegenüberliegende Seite der Paneele (4) berühren, die parallel zu der Paneelvorschubrichtung (5) verläuft.

8. Vorrichtung nach den Ansprüchen 6 oder 7, **dadurch gekennzeichnet, dass** die Abschnitte des Bandes (8, 22), die das Paneel (4) berühren, unter der Einwirkung von Druckrollen stehen, um den Kontakt zwischen den Bändern und der Seite des Paneels zu verstärken.

9. Vorrichtung nach einem oder mehreren der Ansprüche 6 bis 8, **dadurch gekennzeichnet, dass** die Bänder (8, 22) an einem Rahmen (12, 25) gehaltert sind, der steuerbar entlang einer horizontalen Richtung, die im rechten Winkel zu der Paneelvorschubrichtung (5) verläuft, angetrieben werden kann, um die Positionen der Bänder (8, 22) an die Breite des Paneels (4) anzupassen.

10. Vorrichtung nach einem oder mehreren der vorangehenden Ansprüche, **dadurch gekennzeichnet, dass** der Arbeitskopf (50) steuerbar entlang einer horizontalen Richtung, die im rechten Winkel zu der Paneelvorschubrichtung (5) verläuft, angetrieben werden kann.

11. Vorrichtung nach einem oder mehreren der vorangehenden Ansprüche, **dadurch gekennzeichnet, dass** der Arbeitskopf (50) steuerbar entlang einer vertikalen Richtung angetrieben werden kann.

12. Vorrichtung nach einem oder mehreren der vorangehenden Ansprüche, **dadurch gekennzeichnet, dass** - an der Arbeitsstation (6) - zwischen den ersten und den zweiten Zufuhrmitteln (2, 3) eine Mittelrollenbaugruppe (30) angeordnet ist, die an einem Rahmen (32) gehaltert sind, der steuerbar entlang einer vertikalen Richtung angetrieben werden kann.

13. Vorrichtung nach einem oder mehreren der vorangehenden Ansprüche, **dadurch gekennzeichnet, dass** die Paneelpositionierungs- und -arretierungsmittel (40, 41; 43, 44) nahe der Arbeitsstation (6) Anschläge (40) umfassen, die an der Oberseite von der Liegeebene des Paneels (4) zurückgezogen werden können, um mit der vorderen oder hinteren Stoßfläche des Paneels (4) in Eingriff zu gelangen, um die Vorschub- oder Rückzugsbewegung des Paneels zu stoppen, sowie vertikale Druckmittel (43) umfasst, die mit der Oberseite des Paneels (4) in Eingriff gelangen können, um das Paneel (4) zu arretieren.

14. Vorrichtung nach einem oder mehreren der vorangehenden Ansprüche, **dadurch gekennzeichnet, dass** den Stifteinsetzmitteln (81) über einen Stifttransportschacht (90) aus einem Stiftspeicherkasten (91) Stifte (83) zugeführt werden, wobei der Stifttransportschacht (90) entlang seiner Länge Zufuhrmittel enthält, um den Stifteinsetzmitteln (81) jeweils einen Stift (83) auf einmal zuzuführen.

15. Vorrichtung nach einem oder mehreren der vorangehenden Ansprüche, **dadurch gekennzeichnet, dass** die Bohrwerkzeuge (51) durch mehrere Dorne (52) gehalten werden, die gleichzeitig durch einen Motor (65, 66) in Drehbewegung versetzt werden, wobei des Weiteren Antriebsmittel zum Antreiben des Dorns parallel zu der Paneelvorschubrichtung (5) vorhanden sind, wobei die Antriebsmittel dafür konfiguriert sind, dass sie individuell mit den Dornen (52) verbunden werden können.

16. Vorrichtung nach einem oder mehreren der vorangehenden Ansprüche, **dadurch gekennzeichnet, dass** die Stifteinsetzmittel (81) mehrere bewegliche Drückelemente (81) entlang Richtungen parallel zu der Paneelvorschubrichtung (5) im Inneren von mehreren Kammern (82), denen jeweils ein Stift (83) auf einmal zugeführt wird, umfassen, wobei des Weiteren noch Antriebsmittel zum Antreiben der Drückelemente (81) im Inneren der Kammern (82) vorhanden sind, die individuell mit den Drückelementen (81) in Eingriff gebracht werden können.

17. Vorrichtung nach einem oder mehreren der vorangehenden Ansprüche, **dadurch gekennzeichnet, dass** die Stiftzufuhrmittel, die dafür konfiguriert sind, dem Stifteinsetzmittel (81) jeweils einen Stift (83) auf einmal zuzuführen, ein bewegliches Element (92) umfassen, das quer zu dem Stifttransportschacht (90) angetrieben werden kann, wobei das bewegliche Element (92) einen ersten Anschlag (94) enthält, an den der erste Stift (83), der entlang dem Stifttransportschacht (90) transportiert wird, anschlägt und gestoppt wird, und einen zweiten Anschlag (95) enthält, der von einem zweiten transportierten Stift (83) in Eingriff genommen werden kann, wobei der erste Anschlag (94) den ersten Stift (83) in Eingriff nimmt, während sich der zweite Anschlag (95) aus dem Eingriff mit dem zweiten Stift (83) löst, und umgekehrt, indem bewirkt wird, dass das bewegliche Element (92) entweder in einer Richtung oder in der Gegenrichtung angetrieben wird.

## Revendications

1. Appareil (1) pour le perçage et l'insertion de chevilles dans la partie supérieure de panneaux (4), ledit appareil comprenant des moyens d'entraînement des panneaux (2, 3) permettant d'entraîner lesdits panneaux (4) dans une direction d'avance, des moyen de positionnement et de blocage des panneaux (40, 41 ; 43, 44) permettant, respectivement, de positionner (40, 41) et de bloquer (43, 44) un panneau (4) au niveau d'un poste de travail (6), la partie supérieure dudit panneau (4) étant disposée dans un plan sensiblement perpendiculaire à ladite direction d'avance du panneau, une tête d'actionnement (50) disposée dans ledit poste de travail (6) et munie d'outils de perçage (51) permettant de percer la partie supérieure dudit panneau (4) ainsi que de moyens de collage et d'insertion de chevilles permettant de coller et d'insérer des chevilles (83) à l'intérieur des trous percés dans ladite partie supérieure dudit panneau (4), **caractérisé en ce que** lesdits moyens d'entraînement (2, 3) comprennent un premier moyen d'entraînement de panneau (2) disposé en amont dudit poste de travail (6) et un deuxième moyen d'entraînement de panneau (3) disposé en aval dudit poste de travail (6), ledit deuxième moyen d'entraînement (3) présentant une direction d'entraînement réversible afin de positionner la partie supérieure arrière dudit panneau (4) au niveau dudit poste de travail (6).

2. Appareil selon la revendication 1, **caractérisé en ce que** ladite tête d'actionnement (50) supporte une pluralité d'outils de perçage (51), sur les deux côtés de celle-ci, qui se trouvent face à ladite direction d'avance du panneau (5) et à une direction inverse, afin de percer la partie supérieure avant et la partie supérieure arrière dudit panneau (4).

3. Appareil selon l'une ou plusieurs des revendications précédentes, **caractérisé en ce que** lesdits outils de perçage (51) peuvent être contrôlés individuellement dans une direction parallèle à ladite direction d'avance (5).

4. Appareil selon l'une ou plusieurs des revendications précédentes, **caractérisé en ce que** lesdits moyens d'insertion (81) des chevilles (83) se trouvent sur les côtés de ladite tête d'actionnement (50) qui supportent lesdits outils de perçage (51).

5. Appareil selon l'une ou plusieurs des revendications précédentes, **caractérisé en ce que**, sur les côtés de ladite tête d'actionnement (50), qui supporte lesdits outils de perçage (51) et lesdits moyens d'insertion des chevilles (81), se trouvent des buses de pulvérisation de colle (80).

6. Appareil selon l'une ou plusieurs des revendications précédentes, **caractérisé en ce que** ledit premier moyen d'entraînement (2) comprend un assemblage à rouleaux (7) qui définit une surface de support sensiblement horizontale pour lesdits panneaux (4) et une courroie (8), disposée au niveau de la partie supérieure dudit assemblage à rouleaux (7), dont une partie est en contact avec le côté des panneaux (4) qui est parallèle à ladite direction d'avance (5), ladite courroie se trouvant en face de rouleaux d'appui à axe vertical (10) qui sont en contact avec le côté opposé desdits panneaux (4) parallèle à ladite direction d'avance des panneaux (5).

7. Appareil selon l'une ou plusieurs des revendications précédentes, **caractérisé en ce que** ledit deuxième moyen d'entraînement (3) comprend un assemblage à rouleaux (20) définissant une surface de support sensiblement horizontale pour lesdits panneaux (4) et une courroie (22), disposée au niveau de la partie supérieure dudit assemblage à rouleaux (20), dont une partie est en contact avec le côté dudit panneau (4) parallèle à ladite direction d'avance du panneau (5), ladite courroie se trouvant en face de rouleaux d'appui à axe vertical (24) qui sont en contact avec le côté opposé desdits panneaux (4) parallèle à la direction d'avance des panneaux (5).

8. Appareil selon la revendication 6 ou 7, **caractérisé en ce que** les parties desdites courroies (8, 22) en contact avec ledit panneau (4) sont maintenus par des rouleaux de pression afin d'augmenter la liaison desdites courroies avec le côté du panneau.

9. Appareil selon l'une ou plusieurs des revendications 6 à 8, **caractérisé en ce que** lesdites courroies (8, 22) sont supportées par un châssis (12, 25) qui peut être entraîné de manière contrôlée dans une direction horizontale perpendiculaire à la direction d'avance des panneaux (5) afin d'ajuster les positions desdites courroies (8, 22) à la largeur dudit panneau (4).

10. Appareil selon l'une ou plusieurs des revendications précédentes, **caractérisé en ce que** ladite tête d'actionnement (50) peut être entraînée de manière contrôlée dans une direction horizontale perpendiculaire à la direction d'avance des panneaux (5).

11. Appareil selon l'une ou plusieurs des revendications précédentes, **caractérisé en ce que** ladite tête d'actionnement (50) peut être entraînée de manière contrôlée dans une direction verticale.

12. Appareil selon l'une ou plusieurs des revendications précédentes, **caractérisé en ce que**, au niveau dudit poste de travail (6), entre ledit premier et ledit deuxième moyen d'entraînement (2, 3), se trouve un assemblage central à rouleaux (30), supporté par un châssis (32), qui peut être entraîné de manière contrôlée dans une direction verticale.

13. Appareil selon l'une ou plusieurs des revendications précédentes, **caractérisé en ce que** lesdits moyens de positionnement et de blocage des panneaux (40, 41 ; 43, 44) comprennent, à proximité dudit poste de travail (6), des butées (40) pouvant être retirées du plan dudit panneau (4) afin de s'emboîter dans la partie supérieure avant ou arrière dudit panneau (4) afin d'arrêter l'avance ou le mouvement de rétraction dudit panneau, ainsi que des moyens de pression verticaux (43) pouvant être emboîtés avec la face supérieure dudit panneau (4) pour bloquer ledit panneau (4).

14. Appareil selon l'une ou plusieurs des revendications précédentes, **caractérisé en ce que** lesdits moyens d'insertion des chevilles (8) sont alimentés en chevilles (83) par l'intermédiaire d'une conduite d'alimentation en chevilles (90), à partir d'une trémie de stockage des chevilles (91), ladite conduite de transport des chevilles (90) comprenant, sur sa longueur, des moyens d'alimentation afin d'introduire une cheville (83) à la fois dans les moyens d'insertion des chevilles (81).

15. Appareil selon l'une ou plusieurs des revendications précédentes, **caractérisé en ce que** lesdits outils de perçage (51) sont supportés par une pluralité de mandrins (52) entraînés simultanément en rotation à l'aide d'un moteur (65, 66), des moyens d'entraînement étant en outre prévus pour entraîner lesdits mandrins parallèlement à ladite direction d'avance des panneaux (5), lesdits moyens d'entraînement pouvant être couplés individuellement auxdits mandrins (52).

16. Appareil selon l'une ou plusieurs des revendications précédentes, **caractérisé en ce que** lesdits moyens d'insertion des chevilles comprennent une pluralité d'éléments de poussée mobiles (81), dans des directions parallèles à la direction d'avance des panneaux (5), à l'intérieur d'une pluralité de chambres (82) alimentées avec une cheville (83) à la fois, des moyens d'entraînement supplémentaires étant en outre prévus pour entraîner lesdits éléments de poussée (81) à l'intérieur desdites chambres (82) qui peuvent être emboîtées individuellement avec lesdits éléments de poussée (81).

17. Appareil selon l'une ou plusieurs des revendications précédentes, **caractérisé en ce que** lesdits moyens d'alimentation des chevilles, qui peuvent introduire une cheville (83) à la fois dans lesdits moyens d'insertion des chevilles (81), comprennent un élément mobile (92) pouvant être entraîné transversalement par rapport à ladite conduite d'alimentation des chevilles (90), ledit élément mobile (92) comprenant une première butée (94) afin d'arrêter la première cheville (83) transportée le long de ladite conduite d'alimentation des chevilles (90) et une deuxième butée (95) pouvant s'emboîter avec une deuxième cheville (83), ladite première butée (94) s'emboîtant avec ladite première cheville (83), tandis que ladite deuxième butée (95) se dégage de ladite deuxième cheville (83), et vice-versa, tout en entraînant ledit élément mobile (92) soit dans une direction soit dans une direction opposée.
